# EUROPEAN PATENT APPLICATION

(11) **EP 1 873 175 A1**
(43) Date of publication of application: **02.01.2008**
(21) Application number: 06731922.8
(22) Date of filing: 14.04.2006
(51) Int. Cl.: C08F 290/04, C08F 8/00, C08F 220/18, C09J 4/06, C09J 133/06

(54) **CURABLE COMPOSITION, ADHESIVE COMPOSITION CONTAINING SUCH CURABLE COMPOSITION, AND ADHESIVE**

(30) Priority: 14.04.2005 JP 2005116977
(71) Applicant: Kaneka Corporation, Kita-ku Osaka-shi, Osaka 530-8288 (JP)
(72) Inventor: TAKEDA, Masanao, KANEKA CORPORATION Osaka Plant, Settsu-shi, Osaka 566-0072 (JP); FUJITA, Nao, KANEKA CORPORATION Osaka Plant, Settsu-shi, Osaka 566-0072 (JP); TAMAI, Hitoshi, KANEKA CORPORATION Osaka Plant, Settsu-shi, Osaka 566-0072 (JP); NAKAGAWA, Yoshiki, KANEKA CORPORATION Osaka Plant, Settsu-shi, Osaka 566-0072 (JP)
(74) Representative: Hart Davis, Jason
(86) International application number: PCT/JP2006/307986
(87) International publication number: WO 2006/112420

(57) **Abstract**

The present invention has its object to provide an acrylic curable composition which is improved in tackiness, retention and other adhesive properties without reducing the thermal stability and weather resistance. The above-mentioned object can be solved by
a curable composition
which comprises, as an essential component, polymer (I), which is a (meth) acrylic acid ester copolymer having, in each molecule, at least one group represented by the general formula 1:

-OC(O)C(R^{a})=CH₂ (1)

(wherein R^{a} represents a hydrogen atom or a hydrocarbon group containing 1 to 20 carbon atoms) at a terminus of the molecular chain and is obtained by (co) polymerizing an (meth) acrylic acid alkyl ester the alkyl moiety of which contains 7 to 20 carbon atoms.

## Description

### TECHNICAL FIELD

The present invention relates to a curable composition, an adhesive composition utilizing the same, and an adhesive. More particularly, it relates to a curable composition comprising a (meth)acryloyl group-containing acrylic (co)polymer, an adhesive composition containing such curable composition, and an adhesive.

### BACKGROUND ART

Acrylic adhesives show balanced adhesive characteristics even when no tackifier resin is added and are produced in large amounts side by side natural rubber-based adhesives.

Generally, acrylic adhesives are prepared by applying an adhesive solution obtained by solution polymerization of acrylic monomer-based vinyl monomer composition in an organic solvent or an emulsion obtained by emulsion polymerization of such monomer composition in an aqueous system to a base material or substrate or impregnating the substrate with such solution or emulsion, followed by drying by heating.

Due to the molecular weight and molecular weight distribution aspects, acrylic adhesives are insufficient in cohesive force, in particular and are generally improved in this respect by crosslinking. Various formulas for such crosslinking have been developed and, for example, the techniques comprising addition of polyisocyanate compounds, epoxy compounds, polybasic carboxylic acids, polyamine compounds, phenol resins or sulfur compounds, among others, have been proposed.

However, when such crosslinking agents are added, portions other than acrylics are incorporated in the structure and it is foreseen that decreases in thermal stability and weather resistance will result. Therefore, there is also available a method of increasing the thermal stability according to which use is made of an acrylic copolymer comprising an increased content of a cohesive force-enhancing comonomer. However, it is impossible in the prior art to increase the ability to stick to adherends for reasons of the molecular weight and molecular weight distribution etc.

There is no report about the technique for improving the tackiness, retention and other adhesion properties by subjecting acrylic oligomers or acrylic polymers having a polymerizable group at one or each terminus with a controlled molecular weight distribution to reaction to thereby suppress side reactions, among others, construct an orderly comb-like structure and control the intercrosslink molecular weight and crosslink density.

The present inventors have so far reported about (meth)acryloyl group-terminated polymers the main chain of which is an acrylic polymer obtained by living radical polymerization (cf. e.g. Patent Document 1 and 2), without mentioning the use, as an adhesive main component or modifier, of an acrylic adhesive material obtained by (co)polymerizing a (meth)acrylic acid alkyl ester the alkyl moiety of which contains 7 to 20 carbon atoms.
Patent Document 1: Japanese Kokai Publication 2000-72816
Patent Document 2: Japanese Kokai Publication 2000-95826

### SUMMARY OF THE INVENTION

The present invention provides an acrylic curable composition or adhesive composition which is improved in tackiness, retention and other adhesive properties without reducing the thermal stability, weather resistance and other properties intrinsic in acrylic compounds.

The present inventors made intensive investigations to solve the problems mentioned above and, as a result, found that the above problems can be solved by using a specific acrylic acid ester (co) polymer as an essential component. Based on this and other findings, they have completed the present invention.

Thus, the present invention relates to
1) A curable composition
   which comprises, as an essential component, polymer (I), which is a (meth) acrylic acid ester (co) polymer having, in each molecule, at least one group represented by the general formula 1:

   -OC(O)C(R^{a})=CH₂ (1)

   (wherein R^{a} represents a hydrogen atom or a hydrocarbon group containing 1 to 20 carbon atoms) at a terminus of the molecular chain and is obtained by (co) polymerizing an (meth) acrylic acid alkyl ester the alkyl moiety of which contains 7 to 20 carbon atoms.
2) The above-mentioned polymer (I) may be one obtained by copolymerizing a (meth)acrylic acid alkyl ester the alkyl moiety of which contains 4 to 6 carbon atoms and a (meth) acrylic acid alkyl ester the alkyl moiety of which contains 7 to 20 carbon atoms.
3) The above-mentioned polymer (I) may be one obtained by copolymerizing 1 to 99% by weight of a (meth) acrylic acid alkyl ester the alkyl moiety of which contains 7 to 20 carbon atoms.
4) The above-mentioned polymer (I) is preferably one having a number average molecular weight of not lower than 10,000 but not higher than 100,000.
5) The above-mentioned polymer (I) is preferably one having a weight average molecular weight-to-number average molecular weight ratio of lower than 1.8 as determined by gel permeation chromatography.
6) The above-mentioned polymer (I) may be one produced by reacting a halogen-terminated vinyl polymer with a compound represented by the general formula 2:

   M⁺⁻OC(O)C(R^{a})=CH₂ (2)

   (wherein R^{a} represents a hydrogen atom or a hydrocarbon group containing 1 to 20 carbon atoms and M⁺ represents an alkali metal ion or a quaternary ammonium ion).
7) The main chain of the above-mentioned polymer (I) is preferably produced by living radical polymerization of a vinyl monomer or monomers.
8) The above-mentioned polymer (I) preferably has a copper content of not higher than 100 ppm.
9) The above-mentioned curable composition may contain a photo-induced polymerization initiator or thermopolymerization initiator.
10) The above-mentioned curable composition is preferably used as an adhesive composition.
   Further, according to the present invention,
11) The adhesive composition can be used as an adhesive by curing the same, and
12) Curing with active energy ray irradiation or heat can be utilized as the means for curing.

### (Effect of the invention)

The invention can provide a curable composition improved in tackiness, retention and other adhesive properties without any marked deterioration in thermal stability and weather resistance. The curable composition of the invention, which has the above-mentioned characteristics, is suited for use in an acrylic adhesive composition and can provide an adhesive when the adhesive composition is cured.

### DETAILED DESCRIPTION OF THE INVENTION

The curable composition of the present invention comprises a (meth)acrylic acid ester (co)polymer [polymer (I)] having, in each molecule, at least one group represented by the general formula 1:

-OC(O)C(R^{a})=CH₂ (1)

(wherein R^{a} represents a hydrogen atom or a hydrocarbon group containing 1 to 20 carbon atoms) at a terminus of the molecular chain, the copolymer (I) being one obtained by (co) polymerizing an (meth) acrylic acid alkyl ester the alkyl moiety of which contains 7 to 20 carbon atoms. As the copolymer (I), use may also be made, as an essential component, of the product of copolymerization of a (meth) acrylic acid alkyl ester the alkyl moiety of which contains 4 to 6 carbon atoms and a (meth) acrylic acid alkyl ester the alkyl moiety of which contains 7 to 20 carbon atoms. The term "(meth)acryloyl group" is used herein to indicate a group represented by the general formula 1. The term "(co)polymer" refers to a homopolymer or copolymer.

### <Polymer (I)>

The number of (meth)acryloyl groups is not less than 1, and preferably 1.2 to 4, since when it is less than 1 per molecule, poor curability will result from the viewpoint that polymer (I) molecules are to be crosslinked together.

While it is necessary that at least one (meth)acryloyl group per molecule occur at a molecular chain terminus, the group may occur on a side chain of the molecule. From the rubber elasticity viewpoint, however, it is preferred that all (meth)acryloyl groups each occur at a molecular terminus.

The (meth)acryloyl group or, in other words, R^{a} in the general formula 1, is not particularly restricted but, as specific examples of R^{a}, there may be mentioned-H, -CH₃, -CH₂CH₃, -(CH₂)ₙCH₃ (n representing an integer of 2 to 19), -C₆H₅, -CH₂OH and -CN. Preferred are -H and CH₃.

The (meth) acrylic acid alkyl ester monomer to be used for constituting the main chain of the polymer (I) is one the alkyl moiety of which contains 7 to 20 carbon atoms. Examples are n-heptyl (meth)acrylate, n-octyl (meth)acrylate, 2-ethylhexyl (meth)acrylate, nonyl (meth)acrylate, decyl (meth)acrylate, dodecyl (meth) acrylate, phenyl (meth) acrylate, toluyl (meth)acrylate, benzyl (meth)acrylate, 3-methoxybutyl (meth)acrylate and stearyl (meth)acrylate, among others. These may be used singly or a plurality of them may be copolymerized. Among them, 2-ethylhexyl acrylate is preferred from the viewpoint of such adhesive properties as tackiness and retention. The term "(meth)acrylic acid" is used herein to indicate acrylic acid or methacrylic acid.

An (meth)acrylic acid alkyl ester the alkyl moiety of which contains 4 to 6 carbon atoms and the above-mentioned (meth)acrylic acid alkyl ester the alkyl moiety of which contains 7 to 20 carbon atoms may be copolymerized as the (meth) acrylic acid alkyl ester monomers constituting the main chain of the polymer (I). As typical examples of the (meth)acrylic acid alkyl ester the alkyl moiety of which contains 4 to 6 carbon atoms, there may be mentioned n-butyl (meth)acrylate, isobutyl (meth)acrylate, tert-butyl (meth)acrylate, n-penyl (meth)acrylate, n-hexyl (meth)acrylate and cyclohexyl (meth)acrylate. Among them, n-butyl (meth)acrylate and isobutyl (meth)acrylate are preferred as the (meth) acrylic acid alkyl ester the alkyl moiety of which contains 4 to 6 carbon atoms, while 2-ethylhexyl (meth) acrylate and the like are preferred as the (meth)acrylic acid alkyl ester the alkyl moiety of which contains 7 to 20 carbon atoms. The combination of these copolymer components is not particularly restricted but, from the viewpoint of such adhesive properties as tackiness and retention and from the thermal stability and weather resistance viewpoint, the use of butyl acrylate and 2-ethylhexyl acrylate is preferred. The (meth)acrylic acid alkyl ester the alkyl moiety of which contains 4 to 6 carbon atoms and the (meth) acrylic acid alkyl ester the alkyl moiety of which contains 7 to 20 carbon atoms to be copolymerized each may comprise one single (meth) acrylic alkyl ester species or a plurality of (meth) acrylic alkyl ester species.

In addition to the above-mentioned monomers, one or more of the following monomers may be copolymerized as the monomers constituting the main chain of the polymer (I). Examples of these include (meth)acrylic acid monomers, such as (meth)acrylic acid, methyl (meth)acrylate, ethyl (meth)acrylate, n-propyl (meth)acrylate, isopropyl (meth)acrylate, 2-methoxyethyl (meth)acrylate, 2-hydroxyethyl (meth)acrylate, 2-hydroxypropyl (meth)acrylate, glycidyl (meth)acrylate, 2-aminoethyl (meth)acrylate, γ-(methacryioyloxypropyl)trimethoxysilane, ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoramethyl-2-perfluaroethylmethyl (meth)acrylate, 2-perfluorohexylethyl (meth)acrylate, 2-perfluorodecylethyl (meth)acrylate, and 2-perfluorohexadecylethyl (meth)acrylate; styrene monomers, such as styrene, vinyltoluene, α-methylstyrene, chlorostyrene, and styrenesulfonic acid and its salts; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid and monoalkyl and dialkyl esters of fumaric acid; maleimide monomers, such as, maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile-containing vinyl monomers, such as acrylonitrile and methacrylonitrile; amido-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, and allyl alcohol. Among these compounds, one species may be copolymerized, or at least two may be copolymerized. In particular, from the viewpoint of physical properties of a product, styrene monomers and (meth)acrylic monomers are preferred. Acrylate monomers and methacrylate monomers are more preferred.

From the adhesive characteristics viewpoint, the polymer (I) to be used in the practice of the invention is only required to be one resulting from polymerization of the above-mentioned (meth)acrylic acid alkyl ester the alkyl moiety of which contains 7 to 20 carbon atoms and, when such ester is copolymerized with one or more other monomers, the weight proportion of the (meth)acrylic acid alkyl ester the alkyl moiety of which contains 7 to 20 carbon atoms is preferably 1 to 99% by weight, more preferably 10 to 90% by weight, still more preferably 20 to 80% by weight, particularly preferably 30 to 70% by weight. The weight proportion of the (meth) acrylic acid alkyl ester monomer the alkyl moiety of which contains 7 to 20 carbon atoms is excessively low, the desired adhesive characteristics will hardly be exhibited. When, conversely, the proportion is excessively high, the viscosity of the polymer (I) will increase, making handling and purification difficult and resulting in increases in adsorbent consumption, which in turn will cause such problems as loading of the environment with waste adsorbent and increases in adsorbent purification cost; thus, the production activities may be restricted.

The molecular weight distribution [ratio of the weight-average molecular weight (Mw) to the number-average molecular weight (Mn) determined by gel permeation chromatography] of polymer (I) is not particularly limited, but the ratio is preferably less than 1.8, further preferably 1.7 or less, more preferably 1.6 or less, particularly preferably 1.5 or less, specifically preferably 1.4 or less, and most preferably 1.3 or less. In GPC measurement in the present invention, a molecular weight is generally determined in terms of polystyrene using a polystyrene gel column or the like and chloroform or tetrahydrofuran as a mobile phase.

The number-average molecular weight of polymer (I) is preferably in a range of 10,000 to 100,000, more preferably 10,000 to 70,000, and still more preferably 15,000 to 50,000. When the molecular weight is 10,000 or less, the inherent characteristics of the (meth)acrylic acid ester (co) polymer are not easily exhibited, while when the molecular weight is 100,000 or more, handling becomes difficult.

### <Process for producing polymer (I)>

The process for producing polymer (I) is not particularly limited. A vinyl polymer is generally produced by anionic polymerization or radical polymerization, but radical polymerization is preferred in view of versatility of a monomer or easy control. As the radical polymerization, living radical polymerization or radical polymerization using a chain transfer agent is preferred, and the former is particularly preferred.

Radical polymerization processes used for synthesizing polymer (I) are classified into a general radical polymerization process in which a monomer having a specified functional group and a vinyl monomer are simply copolymerized using an azo compound, a peroxide, or the like as a polymerization initiator, and a controlled radial polymerization process in which a specified functional group can be introduced at a controlled position such as a terminus or the like.

The general radical polymerization process is a simple process, and a monomer having a specified functional group can be introduced into a polymer only stochastically. When a polymer with high functionality is desired, therefore, a considerable amount of a monomer must be used. Conversely, use of a small amount of a monomer has the problem of increasing the ratio of a polymer in which the specified functional group is not introduced. There is also the problem of producing only a polymer with a wide molecular weight distribution and high viscosity due to free radical polymerization.

The controlled radical polymerization process is further classified into a chain transfer agent process in which polymerization is performed using a chain transfer agent having a specified functional group to produce a vinyl polymer having the functional group at a terminus, and a living radical polymerization process in which polymerization propagation termini propagate without causing termination reaction to produce a polymer having a molecular weight substantially equal to the design.

The chain transfer agent process is capable of producing a polymer with high functionality, but a considerable amount of a chain transfer agent having a specified functional group must be used relative to the initiator, thereby causing an economical problem of the cost including the treatment cost. Like the general radical polymerization process, the chain transfer agent process also has the problem of producing only a polymer with a wide molecular weight distribution and high viscosity because it is free radical polymerization.

It is true that the living radical polymer process belongs to a radical polymerization process which has a high polymerization rate and is difficult to control because termination reaction easily occurs due to radical coupling or the like. However, unlike in the above-mentioned processes, in the living radical polymerization process, termination reaction little occurs, a polymer having a narrow molecular weight distribution (Mw/Mn of about 1.1 to 1.5) can be produced, and the molecular weight can be freely controlled by changing the charge ratio of the monomer to the initiator.

Therefore, the living radical polymerization process is capable of producing a polymer with a narrow molecular weight distribution and low viscosity and introducing a monomer having a specified functional group into a substantially desired position. Thus, this process is more preferred as a process for producing the vinyl polymer having the specified functional group.

In a narrow sense, "living polymerization" means polymerization in which molecular chains propagate while maintaining activity at the termini. However, the living polymerization generally includes pseudo-living polymerization in which molecular chains propagate in equilibrium between deactivated and activated termini. The definition in the present invention includes the latter.

In recent, the living radical polymerization has been actively studied by various groups. Examples of studies include a process using a cobalt porphyrin complex, as shown in Journal of American Chemical Society (J. Am. Chem. Soc.), 1994, vol. 116, p. 7943; a process using a radical scavenger such as a nitroxide compound, as shown in Macromolecules, 1994, vol. 27, p. 7228; and an atom transfer radical polymerization (ATRP) process using an organic halide or the like as an initiator and a transition metal complex as a catalyst.

Among these living radical polymerization processes, the atom transfer radical polymerization process in which a vinyl monomer is polymerized using an organic halide or a halogenated sulfonyl compound as an initiator and a transition metal complex as a catalyst has the above-mentioned characteristics of the living radical polymerization and also has the characteristic that a terminus has a halogen or the like, which is relatively useful for functional group conversion reaction, and the initiator and catalyst have high degrees of design freedom. Therefore, the atom transfer radical polymerization process is more preferred as a process for producing a vinyl polymer having a specified functional group. Examples of the atom transfer radical polymerization process include the processes disclosed in Matyjaszewski, et al., Journal of American Chemical Society (J. Am. Chem. Soc.), 1995, vol. 117, p. 5614; Macromolecules, 1995, vol. 28, p. 7901; Science, 1996, vol. 272, p. 866; WO96/30421 and WO97/18247; and Sawamoto, et al., Macromolecules, 1995, vol. 28, p. 1721.

In the present invention, any one of these processes may be used without limitation, but the controlled radical polymerization is basically used, and the living radical polymerization is more preferred from the viewpoint of easy control. The atom transfer radical polymerization process is particularly preferred.

First, the controlled radical polymerization process using a chain transfer agent will be described. The radical polymerization process using the chain transfer agent (telomer) is not particularly limited, but examples of a process for producing a vinyl polymer having a terminal structure suitable for the present invention include the following two processes:

A process for producing a halogen-terminated polymer using a halogenated hydrocarbon as the chain transfer agent as disclosed in Japanese Kokai Publication Hei-04-132706, and a method for producing a hydroxyl group-terminated polymer using a hydroxyl group-containing mercaptane or a hydroxyl group-containing polysulfide or the like as the chain transfer agent as disclosed in Japanese Kokai Publication Sho-61-271306, Japanese Patent Publication No. 2594402, and Japanese Kokai Publication Sho-54-47782.

Next, the living radical polymerization will be described.

First, the process using a nitroxide compound as the radical scavenger will be described. This polymerization process generally uses stable nitroxy free radical (=N-O·) as a radical capping agent. Preferred examples of such a compound include, but not limited to, nitroxy free radicals produced from cyclic hydroxyamines, such as 2,2,6,6-substituted-1-piperidinyloxy radical and 2,2,5,5-substituted-1-pyrrolidinyloxy radical. As a substituent, an alkyl group having 4 or less carbon atoms, such as methyl or ethyl, is suitable. Specific examples of a nitroxy free radical compound include, but not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-tert-butylaminoxy radical. Instead of the nitroxy free radical, stable free radical such as galvinoxyl free radical may be used.

The radical capping agent is used in combination with the radical generator. The reaction product of the radical capping agent and the radical generator possibly servers as a polymerization initiator to promote polymerization of an addition-polymerizable monomer. The ratio between both agents used is not particularly limited, but the amount of the radical initiator is preferably 0.1 to 10 moles per mole of the radical capping agent.

As a radical generator, any one of various compounds can be used, but a peroxide capable of generating radical under a polymerization temperature is preferred. Examples of the peroxide include, but not limited to, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl) peroxydicarbonate; and alkyl peresters, such as tert-butyl peroxyoctoate and tert-butyl peroxybenzoate. In particular, benzoyl peroxide is preferred. Instead of the peroxide, a radical generator such as a radical generating azo compound, e.g., azobisisobutyronitrile, may be used.

As reported in Macromolecules, 1995, 28, 2993, the alkoxyamine compound represented by the formula 1 below may be used as the initiator instead of a combination of the radical capping agent and the radical generator.

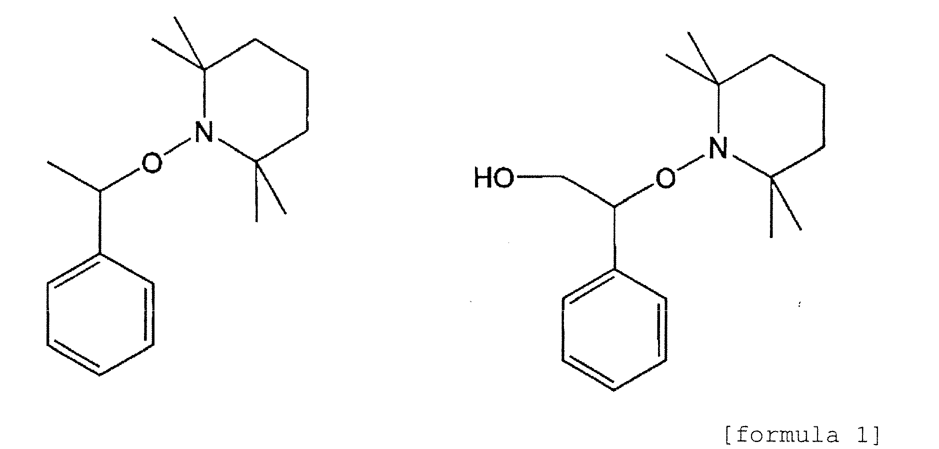

When the alkoxyamine compound is used as the initiator, the use of a compound having a functional group such as a hydroxyl group among those represented by the formula above produces a polymer having the functional group at a terminus. When this compound is used in the method of the present invention, a polymer having the functional group at a terminus is produced.

The conditions of polymerization using the nitroxide compound as the radical scavenger, such as the monomer, the solvent, the polymerization temperature, and the like, are not limited. However, these conditions may be the same as those in atom transfer radical polymerization which will be described below.

Next, the atom transfer radical polymerization suitable as the living radical polymerization of the present invention will be described.

The atom transfer radical polymerization uses, as the initiator, an organic halide, particularly an organic halide having a highly reactive carbon-halogen bond (e.g., a carbonyl compound having a halogen at an α-position, or a compound having a halogen at a benzyl position), or a halogenated sulfonyl compound.

Specific examples of such an initiator include the following:
C₆H₅-CH₂X, C₆H₅-C(H)(X)CH₃, and C₆H₅-C(X) (CH₃)₂ (wherein C₆H₅ is a phenyl group, X is chlorine, bromine, or iodine);
R³-C(H)(X)-CO₂R⁴, R³-C(CH₃)(X)-CO₂R⁴, R³-C(H)(X)-C(O)R⁴, and R³-C(CH₃)(X)-C(O)R⁴
   (wherein R³ and R⁴ are each a hydrogen atom or an alkyl group having 1 to 20 carbon atoms, an aryl group having 6 to 20 carbon atoms, or an aralkyl group having 7 to 20 carbon atoms; X is chlorine, bromine, or iodine); and
   R³-C₆H₄SO₂X
   (wherein R³ is a hydrogen atom or an alkyl group having 1 to 20 carbon atoms, an aryl group having 6 to 20 carbon atoms, or an aralkyl group having 7 to 20 carbon atoms; X is chlorine, bromine, or iodine).

As the initiator of the atom transfer radical polymerization, an organic halide or halogenated sulfonyl compound having a functional group other than a functional group which initiates polymerization can be used. In this case, the resultant vinyl polymer has the functional group at one of the main chain termini and a structure represented by the general formula 3 below at the other terminus. Examples of such a functional group include an alkenyl, crosslinkable silyl, hydroxyl, epoxy, amino, amido, and the like groups.

Examples of an organic halide having an alkenyl group include, but not limited to, compounds having the structure represented by the general formula 6:

R⁶R⁷C (X) -R⁸-R⁹-C(R⁵)=CH₂ (6)

(wherein R⁵ is a hydrogen atom or a methyl group; R⁶ and R⁷ are each a hydrogen atom, an alkyl group having 1 to 20 carbon atoms, an aryl group having 6 to 20 carbon atoms, or an aralkyl group having 7 to 20 carbon atoms, or R⁶ and R⁷ are bonded together at the other termini; R⁸ is -C(O)O- (ester group), -C(O)- (keto group), or an o-, m-, or p-phenylene group; R⁹ is a direct bond or a divalent organic group having 1 to 20 carbon atoms, which may contain at least one ether bond; and X is chlorine, bromine, or iodine).

Specific examples of above R⁶ and R⁷ include a hydrogen atom, a methyl, ethyl, n-propyl, isopropyl, butyl, pentyl, hexyl, phenyl, benzyl and the like groups. Substituents R⁶ and R⁷ may be bonded together at the other termini to form a cyclic skeleton.

Examples of divalent organic group R⁹ having 1 to 20 carbon atoms, which may contain at least one ether bond, include alkylene having 1 to 20 carbon atoms, which may contain at least one ether bond.

Specific examples of an alkenyl group-containing organic halide represented by the general formula 6 include the following:
XCH₂C(O)O(CH₂)ₙCH=CH₂,
H₃CC(H)(X)C (O)O(CH₂)ₙCH=CH₂,
(H₃C)₂C(X)C(O)O(CH₂)ₙCH=CH₂,
CH₃CH₂C(H) (X)C (0) O(CH₂)ₙCH=CH₂, 'and 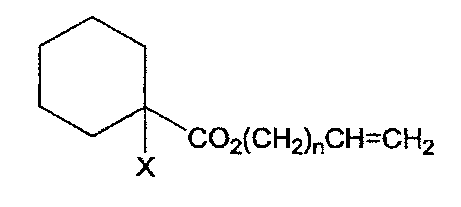 (wherein X is chlorine, bromine, or iodine, and n is an integer of 0 to 20);
XCH₂C(O)O(CH₂)ₙO(CH₂)ₘCH=CH₂,
H₃CC(H)(X)C(O)O(CH₂)ₙO(CH₂)ₘCH=CH₂,
(H₃C)₂C(X)C(O)O(CH₂)ₙO(CH₂)ₘCH=CH₂,
CH₃CH₂C(H)(X)C (O)O(CH₂)ₙO(CH₂)ₘCH=CH₂, and 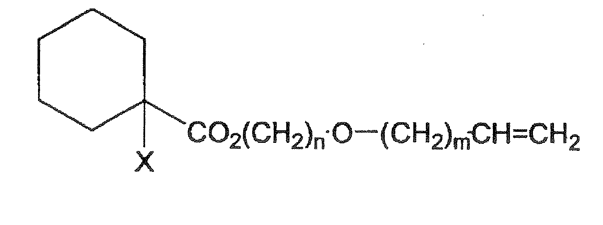 (wherein X is chlorine, bromine, or iodine, n is an integer of 1 to 20, and m is an integer of 0 to 20);
o, m, p-XCH₂-C₆H₄- (CH₂)ₙ-CH=CH₂,
o, m, p-CH₃C(H) (X)-C₆H₄-(CH₂)ₙ-CH=CH₂, and
o, m, p-CH₃CH₂C (H) (X) -C₆H₄- (CH₂)ₙ-CH=CH₂
   (wherein X is chlorine, bromine, or iodine, and n is an integer of 0 to 20);
o, m, p-XCH₂-C₆H₄- (CH₂)ₙ-O-(CH₂)ₘ-CH=CH₂,
o, m, p-CH₃C (H) (X) -C₆H₄-(CH₂)ₙ-O-(CH₂) ₘ-CH=CH₂, and
o, m, p-CH₃CH₂C(H) (X)-C₆H₄(CH₂)ₙ-O- (CH₂)ₘ-CH=CH₂
   (wherein X is chlorine, bromine, or iodine, n is an integer of 1 to 20, and m is an integer of 0 to 20);
o, m, p-XCH₂-C₆H₄-O-(CH₂)ₙ-CH=CH₂,
o, m, p-CH₃C(H)(X)-C₆H₄-O-(CH₂)ₙ-CH=CH₂, and
o, m, p-CH₃CH₂C(H) (X)-C₆H₄-O-(CH₂)ₙ-CH=CH₂
   (wherein X is chlorine, bromine, or iodine, and n is an integer of 0 to 20); and
o, m, p-XCH₂-C₆H₄-O-(CH₂)ₙ-O-(CH₂)ₘ-CH=CH₂,
o, m, p-CH₃C(H) (X)-C₆H₄-O-(CH₂)ₙ-O-(CH₂)ₘ-CH=CH₂, and
o, m, p-CH₃CH₂C(H)(X)-C₆H₄O-(CH₂)ₙ-O-(CH₂)ₘ-CH=CH₂
   (wherein X is chlorine, bromine, or iodine, n is an integer of 1 to 20, and m is an integer of 0 to 20).

Other examples of an organic halide having an alkenyl group include compounds represented by the general formula 7:

H₂C=C(R⁵)-R⁹-C(R⁶)(X)-R¹⁰-R⁷ (7)

(wherein R⁵, R⁶, R⁷, R⁹, and X represent the same as the above, and R¹⁰ represents a direct bond or -C (0) 0- (ester group) , -C (O)-(keto group), or an o-, m-, or p-phenylene group).

R⁹ is a direct bond or a divalent organic group having 1 to 20 carbon atoms (which may contain at least one ether bond). When R⁹ is a direct bond, the compound is a halogenated allyl compound in which a vinyl group is bonded to the carbon bonded to a halogen. In this case, the carbon-halogen bond is activated by the adjacent vinyl group, and thus a C(O)O or phenylene group is not necessarily required as R¹⁰, and a direct bond may be present. When R⁹ is not a direct bond, R¹⁰ is preferably a -C(O)O-, -C(O)-, or phenylene group for activating the carbon-halogen bond.

Specific examples of the compounds represented by the general formula 7 include the following:
CH₂=CHCH₂X, CH₂=C (CH₃)CH₂X, CH₂=CHC(H) (X)CH₃,
CH₂=C(CH₃)C(H)(X)CH₃, CH₂=CHC(X)(CH₃)₂, CH₂=CHC(H) (X)C₂H₅,
CH₂=CHC(H)(X)CH(CH₃)₂, CH₂=CHC(H)(X)C₆H₅, CH₂=CHC(H)(X)CH₂C₆H₅, CH₂=CHCH₂C(H)(X)-CO₂R, CH₂=CH(CH₂)₂C(H)(X)-CO₂R,
CH₂=CH(CH₂)₃C(H) (X)-CO₂R, CH₂=CH(CH₂)₈C(H) (X)-CO₂R,
CH₂=CHCH₂C(H)(X)-C₆H₅, CH₂=CH(CH₂)₂C(H)(X)-C₆H₅, and
CH₂=CH(CH₂)₃C(H)(X)-C₆H₅
   (wherein X is chlorine, bromine, or iodine, and R is an alkyl group having 1 to 20 carbon atoms, an aryl group having 6 to 20 carbon atoms, or an aralkyl group having 7 to 20 carbon atoms).

Specific examples of a halogenated sulfonyl compound having an alkenyl group include the following:
o-, m-, p-CH₂=CH-(CH₂)ₙ-C₆H₄-SO₂X, and
o-, m-, p-CH₂=CH-(CH₂)ₙ-O-C₆H₄-SO₂X
   (wherein X is chlorine, bromine, or iodine, and n is an integer of 0 to 20).

Specific examples of an organic halide having a crosslinkable silyl group include, but not limited to, compounds with a structure represented by the general formula 8 :
R⁶R⁷C(X) -R⁸-R⁹-C(H) (R⁵) CH₂- [Si (R¹¹)_{2-b} (Y) _{b}O]ₘ-Si(R¹²)₃₋ₐ(Y) ₐ (8) (wherein R⁵, R⁶, R⁷, R⁸, R⁹, and X represent the same as the above, and R¹¹ and R¹² each represent an alkyl group having 1 to 20 carbon atoms, an aryl group having 6 to 20 carbon atoms, or an aralkyl group having 7 to 20 carbon atoms, or a triorganosiloxy group represented by (R'')₃SiO- (the three R''s are each a monovalent hydrocarbon group having 1 to 20 carbon atoms and may be the same or different); when two or more groups R¹¹ or R¹² are present, they may be the same or different; Y represents a hydroxyl group or a hydrolyzable group, and when two or more groups Y are present, they may be the same or different; a represents 0, 1, 2, or 3; b represents 0, 1, or 2; m represents an integer of 0 to 19; and a + mb ≥1 is satisfied). Examples of the hydrolyzable group Y include a hydrogen atom, a halogen atom, an alkoxy, acyloxy, ketoxymate, amino, amido, acid amido, aminoxy, mercapto, alkenyloxy, and the like groups.

Specific examples of the compounds represented by the general formula 8 include the following:
XCH₂C(O)O(CH₂)ₙSi(OCH₃)₃,
CH₃C(H)(X)C(O)O(CH₂)ₙSi(OCH₃)₃,
(CH₃)₂C(X)C(O)O(CH₂)ₙSi(OCH₃)₃,
XCH₂C(O)O(CH₂)ₙSi(CH₃)(OCH₃)₂,
CH₃C(H)(X)C(O)O(CH₂)ₙSi(CH₃)(OCH₃)₂, and
(CH₃)₂C(X)C(O)O(CH₂)ₙSi(CH₃)(OCH₃)₂
   (wherein X is chlorine, bromine, or iodine, and n is an integer of 0 to 20);
XCH₂C(O)O(CH₂)ₙO(CH₂)ₘSi(OCH₃)₃,
H₃CC(H)(X)C(O)O(CH₂)ₙO(CH₂)ₘSi(OCH₃)₃,
(H₃C)₂C(X)C(O)O(CH₂)ₙO(CH₂)ₘSi(OCH₃)₃,
CH₃CH₂C(H) (X)C (O)O(CH₂)ₙO(CH₂)ₘSi(OCH₃)₃,
XCH₂C(O)O(CH₂)ₙO(CH₂)ₘSi(CH₃)(OCH₃)₂,
H₃CC(H)(X)C(O)O(CH₂)ₙO(CH₂)ₘ-Si(CH₃)(OCH₃)₂,
(H₃C)₂C(X)C (0) O(CH₂)ₙO(CH₂)ₘ-Si(CH₃)(OCH₃)₂, and
CH₃CH₂C(H)(X)C(O)O(CH₂)ₙO(CH₂)ₘ-Si(CH₃)(OCH₃)₂,
   (wherein X is chlorine, bromine, or iodine, n is an integer of 1 to 20, and m is an integer of 0 to 20); and
o, m, p-XCH₂-C₆H₄-(CH₂)₂Si(OCH₃)₃,
o, m, p-CH₃C(H)(X)-C₆H₄-(CH₂)₂Si(OCH₃),
o, m, p-CH₃CH₂C(H) (X)-C₆H₄-(CH₂)₂Si(OCH₃)₃,
o, m, p-XCH₂-C₆H₄-(CH₂)₃Si(OCH₃)₃,
o, m, p-CH₃C(H) (X)-C₆H₄-(CH₂)₃Si(OCH₃)₃,
o, m, p-CH₃CH₂C(H)(X)-C₆H₄-(CH₂)₃Si(OCH₃)₃,
o, m, p-XCH₂-C₆H₄(CH₂)₂-O-(CH₂)₃Si(OCH₃)₃,
o, m, p-CH₃C(H)(X)-C₆H₄-(CH₂)₂-O-(CH₂)₃Si(OCH₃)₃,
o, m, p-CH₃CH₂C(H)(X)-C₆H₄-(CH₂)₂-O-(CH₂)₃Si(OCH₃)₃,
o, m, p-XCH₂C₆R₄-0-(CH₂)₃Si(OCH₃)₃,
o, m, p-CH₃C(H)(X)-O-(CH₂)₃Si(OCH₃)₃.
o, m, p-CH₃CH₂C(H)(X)-C₆H₄-O-(CH₂)₃-Si(OCH₃)₃,
o, m, p-XCH₂-C₆H₄-O-(CH₂)₂-O-(CH₂)₃-Si(OCH₃)₃,
o, m, p-CH₃C(H)(X)-C₆H₄-O-(CH₂)₂-O-(CH₂)₃Si(OCH₃)₃, and
o, m, p-CH₃CH₂C(H)(X)-C₆H₄-O-(CH₂)-O-(CH₂)₃Si(OCH₃)₃
   (wherein X is chlorine, bromine, or iodine).

Other examples of the organic halide having a crosslinkable silyl group include compounds with a structure represented by the general formula 9:
(R¹²)₃₋ₐ(Y)ₐSi-[OSi(R¹¹)_{2-b}(Y)_{b}]ₘ-CH₂-C(H)(R⁵)-R⁹-C(R⁶)(X)-R¹⁰-R⁷ (9)
   (wherein R⁵, R⁶, R⁷, R⁹, R¹⁰, R¹¹, R¹², a, b, m, X and Y represent the same as the above).

Specific examples of the compounds represented by the general formula 9 include the following:
(CH₃O)₃SiCH₂CH₂C(H) (X)C₆H₅,
(CH₃O)₂(CH₃)SiCH₂CH₂C(H) (X)C₆H₅,
(CH₃O)₃Si(CH₂)₂C(H)(X)-CO₂R,
(CH₃O)₂(CH₃)Si (CH₂)₂C(H) (X)-CO₂R,
(CH₃O)₃Si(CH₂)₃C(H)(X) -CO₂R,
(CH₃O)₂(CH₃)Si (CH₂)₃C(H) (X)-CO₂R,
(CH₃O)₃Si(CH₂)₄C(H) (X)-CO₂R,
(CH₃O)₂(CH₃)Si(CH₂)₄C(H) (X)-CO₂R,
(CH₃O)₃Si(CH₂)₉C(H) (X)-CO₂R,
(CH₃O)₂(CH₃)Si(CH₂)₉C(H)(X)-CO₂R,
(CH₃O)₃Si(CH₂)₃C(H)(X)-C₆H₅,
(CH₃O)₂(CH₃) Si (CH₂)₃C (H) (X)-C₆H₅,
(CH₃O)₃Si(CH₂)₄C(H) (X)-C₆H₅, and
(CH₃O)₂ (CH₃)Si(CH₂)₄C(H) (X)-C₆H₅
   (wherein X is chlorine, bromine, or iodine, and R is an alkyl group having 1 to 20 carbon atoms, an aryl group having 6 to 20 carbon atoms, or an aralkyl group having 7 to 20 carbon atoms) .

Examples of the hydroxyl group-containing organic halide or halogenated sulfonyl compound include, but not limited to, the following:

HO- (CH₂)ₙ-OC(O)C(H) (R) (X)

(wherein X is chlorine, bromine, or iodine, R is a hydrogen atom or an alkyl group having 1 to 20 carbon atoms, an aryl group having 6 to 20 carbon atoms, or an aralkyl group having 7 to 20 carbon atoms, and n is an integer of 1 to 20).

Examples of the amino group-containing organic halide or halogenated sulfonyl compound include, but not limited to, the following:

H₂N-(CH₂)ₙ-OC(O)C(H) (R) (X)

(wherein X is chlorine, bromine, or iodine, R is a hydrogen atom or an alkyl group having 1 to 20 carbon atoms, an aryl group having 6 to 20 carbon atoms, or an aralkyl group having 7 to 20 carbon atoms, and n is an integer of 1 to 20).

Examples of the epoxy group-containing organic halide or halogenated sulfonyl compound include, but not limited to, the following: 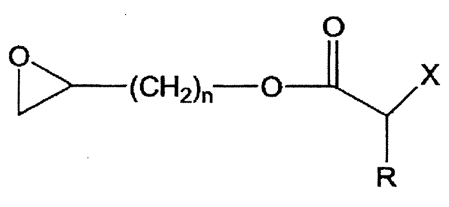 (wherein X is chlorine, bromine, or iodine, R is a hydrogen atom or an alkyl group having 1 to 20 carbon atoms, an aryl group having 6 to 20 carbon atoms, or an aralkyl group having 7 to 20 carbon atoms, and n is an integer of 1 to 20).

In order to obtain a polymer having one terminal structures in the polymer (I) of the present invention per molecule, an organic halide or halogenated sulfonyl compound having one initiation point shown above is preferably used as the initiator.

In order to obtain a polymer having at least two terminal structures in the polymer (I) of the present invention per molecule, an organic halide or halogenated sulfonyl compound having at least two initiation points is preferably used as the initiator. Examples of such an initiator include the following:

o,m,p-X-CH₂-C₆H₄-CH₂-X

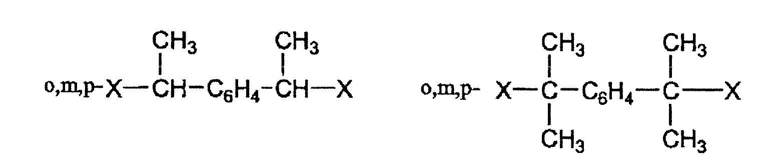

(wherein C₆H₄ is a phenylene group, and X is chlorine, bromine, or iodine.) 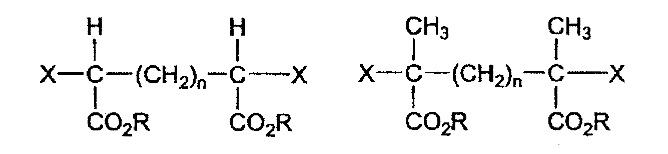 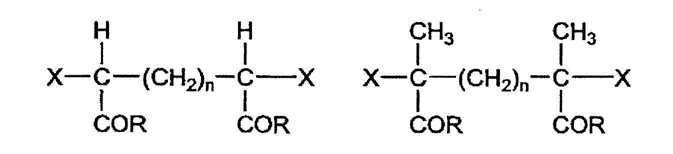 (wherein R is an alkyl, aryl, or aralkyl group having 1 to 20 carbon atoms, n is an integer of 0 to 20, and X is chlorine, bromine, or iodine.) 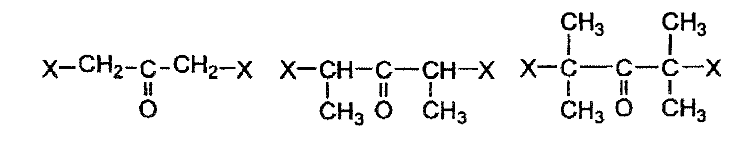 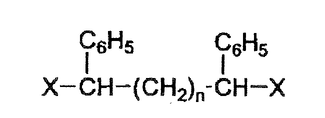 (wherein X is chlorine, bromine, or iodine, and n is an integer of 0 to 20.) 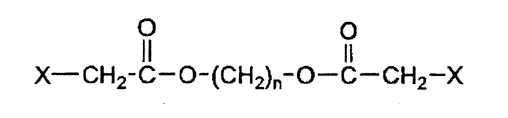 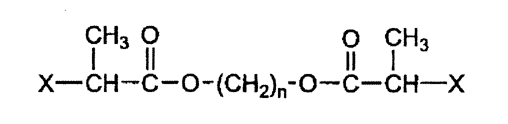 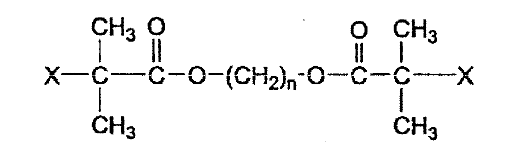 (wherein n is an integer of 1 to 20, and X is chlorine, bromine, or iodine.)

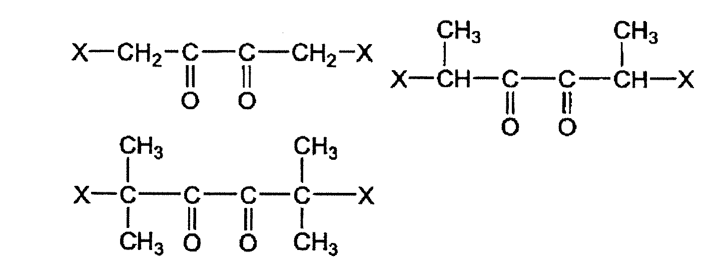

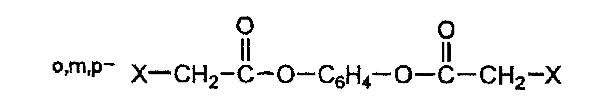

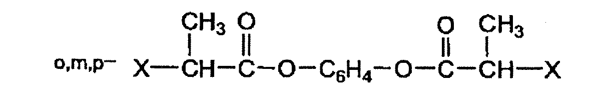

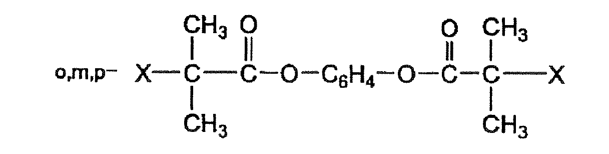

o,m,p- X-SO₂-C₆H₄-SO₂-X

(wherein X is chlorine, bromine, or iodine.)

The vinyl monomer used in the polymerization is not particularly limited, and any of the compounds listed above can be preferably used.

The transition metal complex used as the polymerization catalyst is not particularly limited, but a metal complex composed of a VII, VIII, IX, X, or XI group element in the periodic table as a central metal is preferred. A complex composed of a metal selected from copper, nickel, ruthenium and iron as a central metal is more preferred. A complex of zero-valent copper, monovalent copper, divalent ruthenium, divalent iron, or divalent nickel is still more preferred. Among these complexes, a copper complex is most preferred. Specific examples of a monovalent copper compound include cuprous chloride, cuprous bromide, cuprous iodide, cuprous cyanide, cuprous oxide, and cuprous perchlorate. When a copper compound is used, a ligand, such as 2,2'-bipyridyl or its derivative, 1,10-phenanthroline or its derivative, or polyamine, e.g., tetramethylethylenediamine, pentamethyldiethylenetriamine, or hexamethyl tris (2-aminoethyl) amine, can be added for increasing catalyst activity.

Also, a tristriphenylphosphine complex (RuCl₂(PPh₃)₃) of divalent ruthenium chloride is suitable as the catalyst. When a ruthenium compound is used, an aluminum alkoxide is added as an activator. Furthermore, a bistriphenylphosphine complex (FeCl₂(PPh₃)₂) of divalent iron, a bistriphenylphosphine complex (NiCl₂(PPh₃)₂) of divalent nickel, or a bistributylphosphine complex (NiBr₂(PBu₃)₂) of divalent nickel is preferred as the catalyst.

The polymerization can be performed without a solvent or in any of various solvents. Examples of the solvent include hydrocarbon solvents, such as benzene and toluene; ether solvents, such as diethyl ether and tetrahydrofuran; halogenated hydrocarbon solvents, such as methylene chloride and chloroform; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; and carbonate solvents, such as ethylene carbonate and propylene carbonate. These solvents can be used alone or as a mixture of two or more.

The polymerization can be performed in a range of room temperature to 200°C, and preferably 50°C to 150°C.

When the polymer (I) is purified from the transition metal complex used as the polymerization catalyst, in particular copper, the polymer (I) can be purified to a copper content of 100 ppm or below. A copper content in the polymer (I) exceeding 100 ppm unfavorably tends to cause decreases in transparency and reactivity. The copper content so referred to herein is the value measured by the copper content measurement method described later herein.

### <Introduction of functional group>

The process for producing polymer (I) is not particularly limited, but polymer (I) can be produced by, for example, preparing a vinyl polymer having a reactive functional group by the above-described method, and then substituting the reactive functional group with a substituent having a (meth)acryloyl group. The introduction of a terminal functional group in the polymer of the present invention will be described below.

The process for introducing a (meth)acryloyl group to a terminus of the vinyl polymer is not particularly limited, but the following process can be used:
(Introduction process 1) Process of reacting a vinyl polymer having a halogen group at a terminus with a compound represented by the general formula 2:

   M⁺⁻OC(O)C(R)=CH₂ (2)

   (wherein R represents hydrogen or an organic group having 1 to 20 carbon atoms, and M⁺ represents an alkali metal ion or quaternary ammonium ion).
   As the vinyl polymer having a halogen group at a terminus, a polymer having a terminal structure represented by the general formula 3 is preferred:

   -CR¹R²X (3)

   (wherein R¹ and R² each represent a group bonded to an ethylenically unsaturated group of a vinyl monomer, and X represents chlorine, bromine, or iodine).
(Introduction process 2) Process of reacting a vinyl polymer having a hydroxyl group at a terminus with a compound represented by the general formula 4:

   XC(O)C(R)=CH₂ (4)

   (wherein R represents hydrogen or an organic group having 1 to 20 carbon atoms, and X represents chlorine, bromine, or a hydroxyl group).
(Introduction process 3) Process of reacting a vinyl polymer having a hydroxyl group at a terminus with a diisocyanate compound and then reacting the residual isocyanate group with a compound represented by the general formula 5:

   HO-R'- OC(O)C(R)=CH₂ (5)

   (wherein R represents hydrogen or an organic group having 1 to 20 carbon atoms, and R' represents a divalent organic group having 2 to 20 carbon atoms).

Each of these processes will be described in detail below.

### <Introduction process 1>

Introduction process 1 includes reacting a vinyl polymer having a halogen group at a terminus with a compound represented by the general formula 2:

M⁺⁻OC(O)C(R)=CH₂ (2)

(wherein R represents hydrogen or an organic group having 1 to 20 carbon atoms, and M⁺ represents an alkali metal ion or quaternary ammonium ion).

Although the vinyl polymer having a halogen group at a terminus is not particularly limited, a polymer having a terminal structure represented by the general formula 3 is preferred:

-CR¹R²X (3)

(wherein R¹ and R² each represent a group bonded to an ethylenically unsaturated group of a vinyl monomer, and X represents chlorine, bromine, or iodine).

The vinyl polymer having the terminal structure represented by the general formula 3 can be produced by a process of polymerizing a vinyl monomer using the organic halide or halogenated sulfonyl compound as the initiator and the transition metal complex as the catalyst, or a process of polymerizing a vinyl monomer using a halide as the chain transfer agent. However, the former process is preferred.

The compound represented by the general formula 2 is not particularly limited. Specific examples of R include -H, -CH₃, -CH₂CH₃, -(CH₂)ₙCH₃ (n represents an integer of 2 to 19), -C₆H₅, -CH₂OH, and -CN. Among these groups, -H and -CH₃ are preferred.

M⁺ is a counter cation of oxyanion, and an alkali metal ion, specifically lithium ion, sodium ion, or potassium ion, a quaternary ammonium ion, or the like can be used. Examples of a quaternary ammonium ion include tetramethylammonium ion, tetraethylammonium ion, tetrabenzylammonium ion, trimethyldodecylammonium ion, tetrabutylammonium ion, and dimethylpiperidiniuum ion, and preferably sodium ion or potassium ion. The oxyanion in the general formula 2 is preferably used in an amount of 1 to 5 equivalents and more preferably 1.0 to 1.2 equivalents relative to the halogen terminal represented by the general formula 3.

The solvent used for carrying out the reaction is not particularly limited, but a polar solvent is preferred because the reaction is nucleophilic substitution reaction. Examples of the solvent include tetrahydrofuran, dioxane, diethyl ether, acetone, dimethylsulfoxide, dimethylformamide, dimethylacetamide, hexamethylphosphoric triamide, and acetonitrile.

The reaction temperature is not particularly limited, but it is generally 0 to 150°C and more preferably room temperature to 100°C.

### <Introduction process 2>

Introduction process 2 includes reacting a vinyl polymer having a hydroxyl group at a terminus with a compound represented by the general formula 4:

XC(O)C(R)=CH₂ (4)

(wherein R represents hydrogen or an organic group having 1 to 20 carbon atoms, and X represents chlorine, bromine, or a hydroxyl group).

The compound represented by the general formula 4 is not particularly limited. Specific examples of R include -H, -CH₃, -CH₂CH₃, -(CH₂)ₙCH₃ (n represents an integer of 2 to 19), -C₆H₅, -CH₂OH, and -CN. Among these groups, -H and -CH₃ are preferred.

The vinyl polymer having a hydroxyl group at a terminus can be produced by a process of polymerizing a vinyl monomer using the organic halide or halogenated sulfonyl compound as the initiator and the transition metal complex as the catalyst, or a process of polymerizing a vinyl monomer using a hydroxyl group-containing compound as the chain transfer agent. However, the former process is preferred. The process for producing the vinyl polymer having a hydroxyl group at a terminus is not particularly limited, but examples of the process include the following:
(a) A process of reacting a second monomer such as a compound having both a polymerizable alkenyl group and a hydroxyl group in its molecule represented by the general formula 10 below in living radical polymerization for synthesizing a vinyl polymer.

   H₂C=C(R¹³)-R¹⁴-R¹⁵-OH (10)

   (wherein R¹³ represents an organic group having 1 to 20 carbon atoms, preferably a hydrogen atom or a methyl group, and may be the same or different, R¹⁴ represents -C(O)O- (ester group) or an O-, m-, or p-phenylene group, and R¹⁵ represents a direct bond or a divalent organic group having 1 to 20 carbon atoms, which may contain at least one ether bond. The compound having an ester group as R¹⁴ is a (meth)acrylate compound, and the compound having a phenylene group as R¹⁴ is a styrene compound).
   The time to react the compound having both a polymerizable alkenyl group and a hydroxyl group in its molecule is not particularly limited. However, particularly when rubber properties are expected, the second monomer is preferably reacted at the final stage of polymerization reaction or after the completion of reaction of a predetermined monomer.
(b) A process of reacting a second monomer such as a compound having both a low-polymerizable alkenyl group and a hydroxyl group in its molecule at the final stage of polymerization reaction or after the completion of reaction of a predetermined monomer in living radical polymerization for synthesizing a vinyl polymer.
   The compound is not particularly limited, but a compound represented by the general formula 11 or the like can be used.

   H₂C=C(R¹³)-R¹⁶-OH (11)

   (wherein R¹³ represent the same as the above, and R¹⁶ represents a divalent organic group having 1 to 20 carbon atoms, which may contain at least one ether bond).
   The compound represented by the general formula 11 is not particularly limited, but an alkenyl alcohol, such as 10-undecenol, 5-hexenol, or allyl alcohol, is preferred from the viewpoint of easy availability.
(c) A process of introducing a terminal hydroxyl group by hydrolysis of a carbon-halogen bond represented by the general formula 2 or by reacting a hydroxyl group-containing compound with a halogen of a vinyl polymer having at least one carbon-halogen bond represented by the general formula 2, which is produced by atom transfer radical polymerization, as disclosed in Japanese Kokai Publication Hei-04-132706.
(d) A process of introducing a halogen by reacting a vinyl polymer having at least one carbon-halogen bond represented by the general formula 2 and produced by atom transfer radical polymerization with a stabilized carbanion represented by the general formula 12 having a hydroxyl group.

   M⁺C⁻(R¹⁷)(R¹⁸)-R¹⁶-OH (12) (12)

   (wherein R¹⁶ and M⁺ represent the same as the above, and R¹⁷ and R¹⁸ each represent an electrophilic group capable of stabilizing carbanion C⁻ or one of R¹⁷ and R¹⁸ represents an electrophilic group, the other representing hydrogen or an alkyl or phenyl group having 1 to 10 carbon atoms).
   Examples of the electrophilic group as R¹⁷ and R¹⁸ include -CO₂R (ester group), -C(O)R (keto group), -CON(R₂) (amido group), -COSR (thioester group), -CN (nitrile group), and -NO₂ (nitro group). Substituent R is an alkyl group having 1 to 20 carbon atoms, an aryl group having 6 to 20 carbon atoms, or an aralkyl group having 7 to 20 carbon atoms, and preferably an alkyl or phenyl group having 1 to 10 carbon atoms. In particular, -CO₂R, -C(O)R, and -CN are preferred as R¹⁷ and R¹⁸.
(e) A process of reacting a vinyl polymer having at least one carbon-halogen bond represented by the general formula 2 and produced by atom transfer radical polymerization with an elemental metal, such as zinc, or an organometallic compound to prepare an enolate anion, and then reacting the anion and an aldehyde or ketone.
(f) A process of reacting a vinyl polymer having at least one terminal halogen, preferably at least one halogen represented by the general formula 3, with a hydroxyl group-containing oxy anion represented by the general formula 13 or a hydroxyl group-containing carboxylate anion represented by the general formula 14 to substitute the halogen with a hydroxyl group-containing substituent.

   HO-R¹⁶-O⁻M⁺ (13)

   (wherein R¹⁶ and M⁺ represent the same as the above.)

   HO-R¹⁶-C(O)O⁻M⁺ (14)

   (wherein R¹⁶ and M⁺ represent the same as the above.)

Among processes (a) and (b) for introducing a hydroxyl group without directly involving a halogen, process (b) is more preferred from the viewpoint of ease of control.

Among processes (c) to (f) for introducing a hydroxyl group by converting the halogen of the vinyl polymer having at least one carbon-halogen bond, process (f) is more preferred from the viewpoint of ease of control.

### <Introduction process 3>

Introduction process 3 includes reacting a vinyl polymer having a hydroxyl group at a terminus and a diisocyanate compound and then reacting the residual isocyanate group with a compound represented by the general formula 5:

HO-R'-OC(O)C(R)=CH₂ (5)

(wherein R represents a hydrogen atom or an organic group having 1 to 20 carbon atoms, and R' represents a divalent organic group having 2 to 20 carbon atoms).

The compound represented by the general formula 5 is not particularly limited, and specific examples of R include -H, -CH₃, -CH₂CH₃, -(CH₂)ₙCH₃ (n represents an integer of 2 to 19), -C₆H₅, -CH₂OH, and -CN. Among these groups, -H and -CH₃ are preferred. As the specific compound, 2-hydroxypropyl methacrylate is mentioned.

The vinyl polymer having a hydroxyl group at a terminus is as described above.

The diisocyanate compound is not particularly limited, and any known compound can be used. Examples of the compound include toluylene diisocyanate, 4,4'-diphenylmethane diisocyanate, hexamethyl diisocyanate, xylylene diisocyanate, metaxylylene diisocyanate, 1,5-naphthalene diisocyanate, hydrogenated diphenylmethane diisocyanate, hydrogenated toluylene diisocyanate, hydrogenated xylylene diisocyanate, isophorone diisocyanate, and the like isocyanate compounds. These compounds can be used alone or in combination of two or more. Also, a block isocyanate may be used.

In order to achieve higher weather resistance, a diisocyanate compound with no aromatic ring, such as hexamethylene diisocyanate or hydrogenated diphenylmethane diisocyanate, is preferably used as the diisocyanate compound.

### <Curable composition>

The curable composition according to the present invention comprises polymer (I) as an essential component. The composition preferably does not comprise other polymerizable monomers in order to overcome an odor problem due to residual monomers, but a polymerizable monomer and/or oligomer and various additives can be added in accordance with the intended use.

As the polymerizable monomer and/or oligomer, a monomer and/or oligomer having a radical polymerizable group or a monomer and/or oligomer having an anionic polymerizable group is preferred. Examples of the radical polymerizable group include acryl functional groups, such as a (meth)acryl group, a styrene group, an acrylonitrile group, a vinylester group, an N-vinylpyrrolidone group, an acrylamide group, a conjugated diene group, a vinyl ketone group, and a vinyl chloride group. In particular, a monomer and/or oligomer having a (meth) acryloyl group similar to the polymer (I) of the present invention is preferred. Examples of the anionic polymerizable group include (meth)acryl, styrene, acrylonitrile, N-vinylpyrrolidone, an acrylamide, conjugated diene, and vinyl ketone. In particular, a monomer and/or oligomer having a (meth)acryloyl group similar to the polymer (I) of the present invention is preferred.

Specific examples of the monomer include (meth)acrylate monomers, cyclic acrylates, N-vinylpyrrolidone, styrene monomers, acrylonitrile, N-vinylpyrrolidone, acrylamide monomers, conjugated diene monomers, and vinyl ketone monomers. Examples of (meth)acrylate monomers include n-butyl (meth)acrylate, 2-ethylhexyl (meth)acrylate, isooctyl (meth)acrylate, isonoyl (meth)acrylate, and compounds represented by the following formulae: 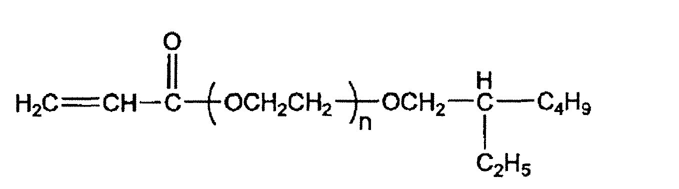 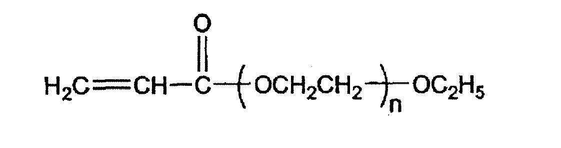 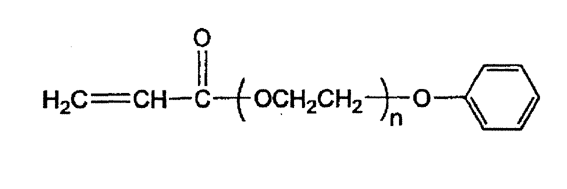 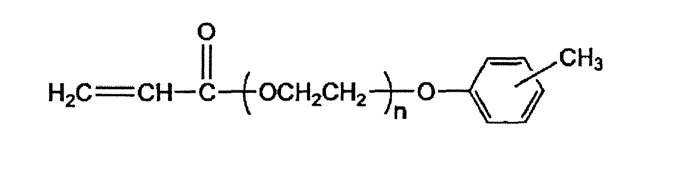 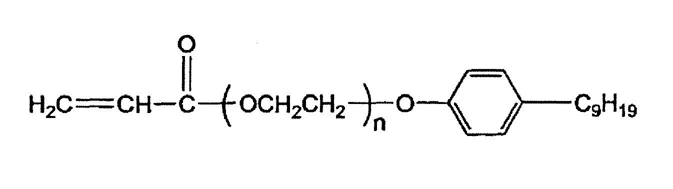 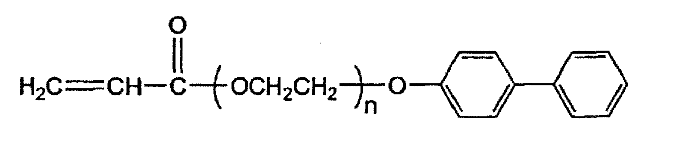 (wherein n represents an integer of 0 to 20.) 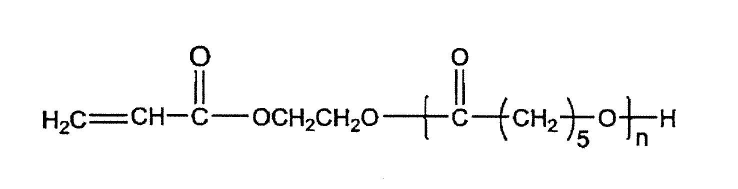 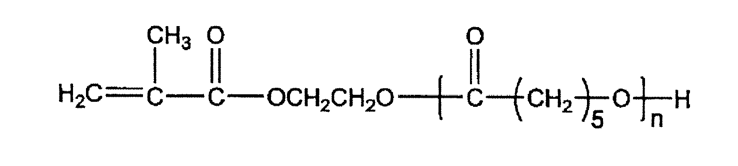 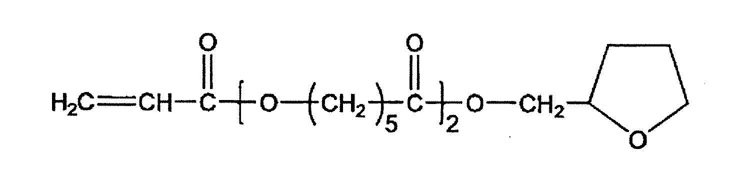 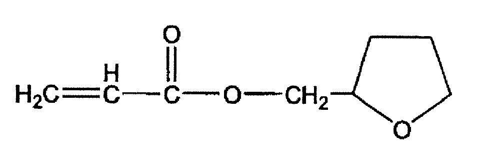 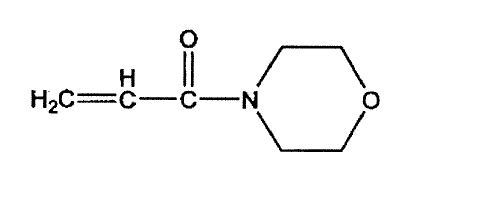 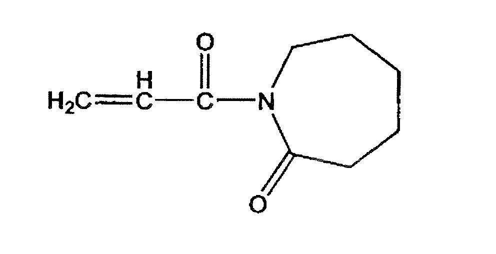 (wherein n represents an integer of 0 to 20.) 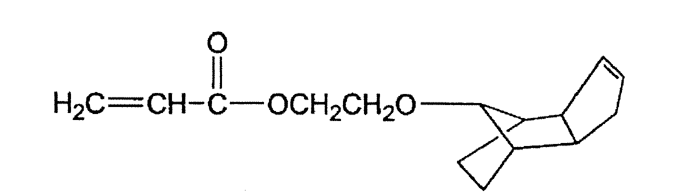 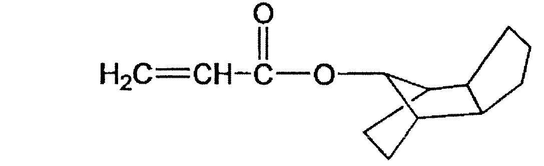 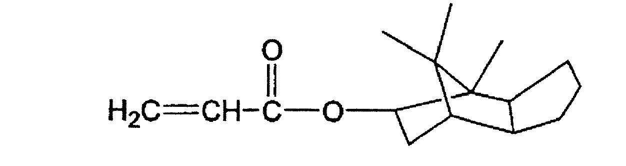 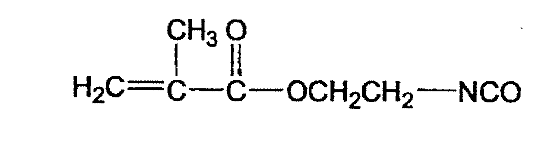 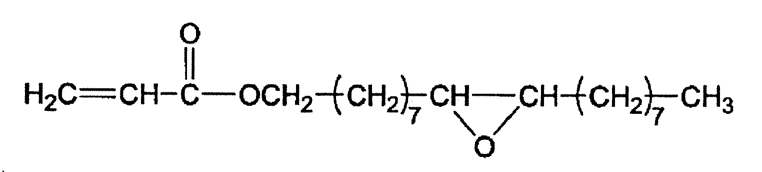 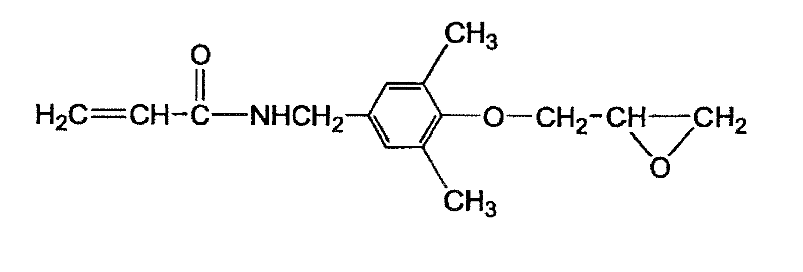 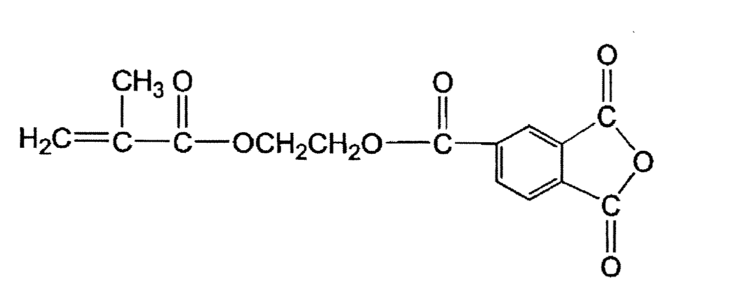 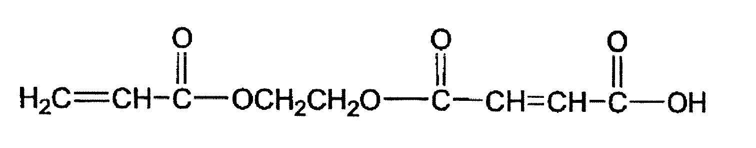 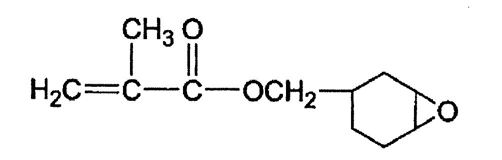 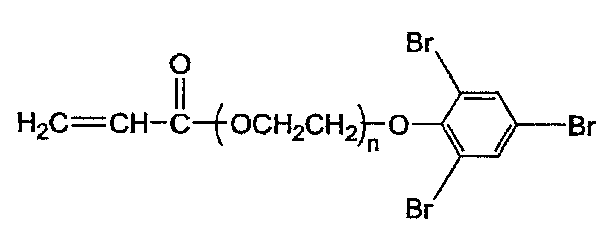 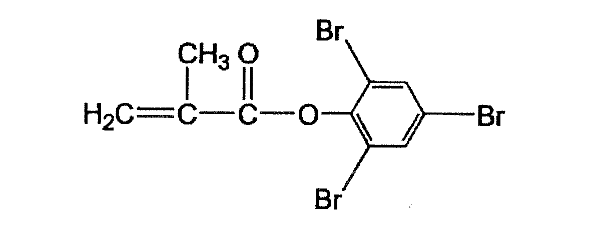 (wherein n represents an integer of 0 to 20.) 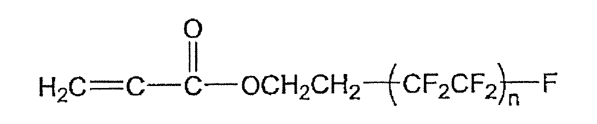 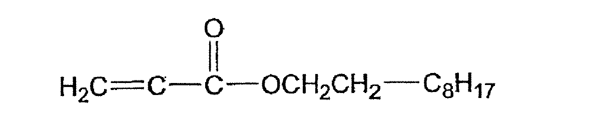 (wherein n represents an integer of 0 to 20.)

Examples of the styrene monomers include styrene and α-methylstyrene, examples of the acrylamide monomers include acrylamide and N,N-dimethylacrylamide, examples of the conjugated diene monomers include butadiene and isoprene, and example of the vinyl ketone monomers include methyl vinyl ketone.

Examples of polyfunctional monomers include neopentylglycol polypropoxydiacrylate, trimethylolpropane polyethoxytriacrylate, bisphenol F polyethoxydiacrylate, bisphenol A polyethoxydiacrylate, dipentaerythritol polyhexanolide hexacrylate, tris(hydroxyethyl)isocyanurate polyhexanolide triacrylate, tricyclodecanedimethylol diacrylate 2-(2-acryloyloxy-1,1-dimethyl)-5-ethyl-5-acryloyloxymethyl-1,3-dioxane, tetrabromobisphenol A diethoxydiacrylate, 4,4-dimercaptodiphenyl sulfide dimethacrylate, polytetraethylene glycol diacrylate, 1,9-nonanediol diacrylate, and ditrimethylolpropane tetraacrylate.

Examples of the oligomer include epoxy acrylate resins, such as bisphenol A epoxy acrylate resins, phenol novolac epoxy acrylate resins, and cresol novolac epoxy acrylate resins; COOH-modified epoxy acrylate resins; urethane acrylate resins prepared by reacting urethane resins with a hydroxyl group-containing (meth)acrylate [hydroxyethyl (meth) acrylate, hydroxypropyl (meth)acrylate, hydroxylbutyl (meth)acrylate, pentaerythritol triacrylate, or the like], the urethane resins being prepared from polyols (polytetramethylene glycol, polyester diol of ethylene glycol and adipic acid, ε-caprolactone-modified polyester diol, polypropylene glycol, polyethylene glycol, polycarbonate diol, hydroxyl group-terminated hydrogenated polyisoprene, hydroxyl group-terminated polybutadiene, hydroxyl group-terminated polyisobutylene, and the like) and organic isocyanates (tolylene diisocyanate, isophorone diisocyanate, diphenylmethane diisocyanate, hexamethylene diisocyanate, xylylene diisocyanate, and the like) ; polyester acrylate resins prepared by introducing (meth)acryl groups in the polyols through ester bonds.

These monomers and oligomers are selected in accordance with the intended use. These may be used alone or two or more species of these may be used in combination.

The number-average molecular weight of the monomer and/or oligomer having a (meth) acryloyl group is preferably 2,000 or less, and more preferably 1,000 or less because of high compatibility.

The curable composition of the present invention includes a (meth) acrylic acid ester (co)polymer as a main component, and thus a tackfier resin need not necessarily be added when it is used as an adhesive composition. However, any one of various resins can be added. Specific examples of the resins include phenol resins, modified phenol resins cyclopentadiene-phenol resins, xylene resins, coumarone resins, petroleum resins, terpene resins, terpene phenol resins, and rosin ester resins.

The curable composition of the present invention may contain various additives, for example, an antiaging agent, a plasticizer, a physical property adjuster, a solvent, etc. for controlling the physical properties.

The antiaging agent is not necessarily required because the (meth)acrylic acid ester (co)polymer originally has excellent heat resistance, weather resistance, and durability. However, a conventional known antioxidant or ultraviolet absorber can be appropriately used.

Examples of the plasticizer include phthalic acid esters, such as dibutyl phthalate, diheptyl phthalate, di(2-ethylhexyl) phthalate, and butylbenzyl phthalate; non-aromatic dibasic acid esters, such as dioctyl adipate and dioctyl sebacate; polyalkylene glycol esters, such as diethylene glycol dibenzoate and triethylene glycol dibenzoate; phosphoric acid esters, such as tricresyl phosphate and tributyl phosphate; chlorinated paraffins; hydrocarbon oils, such as alkyldiphenyl and partially hydrogenated terphenyl. These plasticizers can be used alone or in combination according to the purpose of controlling physical properties or quality. However, the plasticizer is not necessarily required. The plasticizer can be added in production of the polymer.

Examples of the solvent usable in production of the polymer include aromatic hydrocarbon solvents, such as toluene and xylene; ester solvents, such as ethyl acetate, butyl acetate, amyl acetate, and cellosolve acetate; and ketone solvents, such as methyl ethyl ketone, methyl isobutyl ketone, and diisobutyl ketone.

Also, the curable composition of the present invention may contain any one of various adhesiveness improvers for improving adhesiveness to various supports (plastic films, paper and the like). Examples of the improvers include alkylalkoxysilanes, such as methyltrimethoxysilane, dimethyldimethoxysilane, trimethylmethoxysilane, and n-propyltrimethoxysilane; alkylisopropenoxysilanes, such as dimethyldiisopropenoxysilane, methyltriisopropenoxysilane, and γ-glycidoxypropylmethyldiisopropenoxysilane; functional group-containing alkoxysilanes, such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)-γ-aminopropyltrimethoxysilane, N-(β-aminoethyl)-γ-aminopropylmethyldimethoxysilane, γ-mercaptopropyltrimethoxysilane, γ-mercaptopropylmethyldimethoxysilane; silicone vanishes; and polysiloxanes.

### <Curing process>

The curable composition of the present invention is preferably cured with active energy rays such as UV or electron beams, or heat, although the curing process is not limited to this.

### <Curing with active energy ray>

When the curable composition of the present invention is cured with active energy rays, the curable composition preferably contains a photo-induced polymerization initiator.

The photo-induced polymerization initiator is not particularly limited, but a photoradical initiator or a photoanion initiator is preferred. In particular, the photoradical initiator is preferred. Examples of the photoradical initiator include acetophenone, propiophenone, benzophenone, xanthol, fluoreine, benzaldehyde, anthraquinone, triphenylamine, carbozole, 3-methylacetophenone, 4-methylacetophenone, 3-pentylacetophenone, 2,2-diethoxyacetophenone, 4-methoxyacetopohenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl) ketone, benzylmethoxyketal, 2-chlorothioxanthone, 2,4,6-trimethylebenzoyldiphenylphosphine oxide, bis(2,4,6-trimethylbenzoyl)phenylphosphine oxide, bis(2,6-dimethoxybenzoyl)-2,4,4-trimethylpentylphosphine oxide, 2,2-dimethoxy-1,2-diphenylethan-1-one, 1-hydroxycyclohexyl phenyl ketone, 2-hydroxy-2-methyl-1-phenylpropan-1-one, 2-methyl-1-[4-(methylthio)phenyl]-2-morpholinopropan-1-one and 2-benzyl-2-dimethylamino-1-(4-morpholinophenyl)butanone-1, among others. Preferred among them are α-hydroxyketone compounds (e.g. benzoin, benzoin methyl ether, benzoin butyl ether, 1-hydroxycyclohexyl phenyl ketone, etc.) and phenyl ketone derivatives (e.g. acetophenone, propiophenone, benzophenone, 3-methylacetophenone, 4-methylacetophenone, 3-pentylaetophenone, 2,2-diethoxyacetophenone, 4-methoxyacetophenone, 3-bromoacetophenone, 4-allylacetophenone, 3-methoxybenzophenone, 4-methylbenzophenone, 4-chlorobenzophenone, 4,4'-dimethoxybenzophenone, 4-chloro-4'-benzylbenzophenone, bis(4-dimethylaminophenyl) ketone, etc.).

As the photo-induced anionic polymerization initiator, there may be mentioned, for example, 1,10-diaminodecane, 4,4'-trimethylenedipiperidine, carbamates and derivatives thereof, cobalt-amine complexes, aminoxyimino compounds and ammonium borates.

These initiators may be used singly or in combination with some other compound. Specifically, mention may be made of the combination with such an amine as diethanolmethylamine, dimethylethanolamine or triethanolamine and, further, the combination with an iodonium salt such as diphenyliodonium chloride in addition to such an amine and the combination with such a dye as methylene blue and such an amine, among others. When the above-mentioned photo-induced polymerization initiator is used, it is also possible to add such a polymerization inhibitor as hydroquione, hydroquinone monomethyl ether, benzoquinone or para-tertiary butyl catechol according to need.

Furthermore, a near-infrared light absorbing cationic dye may be used as a photo-induced polymerization initiator. As the near-infrared light absorbing cation dye, a dye which is excited with light energy in a range of 650 nm to 1, 500 nm, for example, the near-infrared light absorbing cation dye-borate anion complex disclosed in Japanese Kokai Publication Hei-03-111402 and Hei-05-194619, is preferably used. A boron-based sensitizing agent is more preferably combined.

Since it is sufficient that the polymerization system is slightly made optically functional, the amount of the photo-induced polymerization initiator added is, but not limited to, preferably 0.001 to 10 parts by weight, more preferably about 0.01 to 5 parts by weight, relative to 100 parts by weight of the polymer (I) of the curable composition of the invention.

A source of the active energy rays is not particularly limited but, for instance, light or electron beams are applied using, for example, a high-pressure mercury lamp, a low-pressure mercury lamp, an electron beam irradiation device, a halogen lamp, a light-emitting diode, a semiconductor laser, or a metal halide depending on the property of the photo-induced polymerization initiator.

### <Thermal curing>

In thermal curing of the curable composition of the invention, the curable composition preferably contains a thermopolymerization initiator.

Examples of the thermopolymerization initiator include, but not limited to, azo initiators, peroxides, persulfates, and redox initiators.

Specific examples of suitable azo initiators include, but not limited to, 2,2'-azobis(4-methoxy-2,4-dimethylvaleronitrile) (VAZO 33), 2,2'-azobis(2-amidinopropane) dibasic acid salt (VAZO 50), 2,2'-azobis(2,4-dimethylvaleronitrile) (VAZO 52), 2,2'-azobis(isobutyronitrile) (VAZO 64), 2,2'-azobis-2-methylbutyronitrile (VAZO 67), and 1,1-azobis(1-cyclohexanecarbonitrile) (VAZO 88) (all available from DuPont Chemical); and 2,2'-azobis(2-cyclopropylpropionitrile) and 2,2'-azobis(methylisobutylate) (V-601) (available from Wako Pure Chemical Industries, Ltd.).

Examples of suitable peroxide initiators include, but not limited to, benzoyl peroxide, acetyl peroxide, lauroyl peroxide, decanoyl peroxide, diacetyl peroxydicarbonate, di(4-tert-butylcyclohexyl) peroxydicarbonate (Perkadox 16S) (available from Akzo Nobel), di(2-ethylhexyl) peroxydicarbonate, tert-butyl peroxypivalate (Lupersol 11) (available from Elf Atochem), tert-butyl peroxy-2-ethylhexanoate (Trigonox 21-C50) (available from Akzo Nobel), and dicumyl peroxide.

Examples of suitable persulfate initiators include, but not limited to, potassium persulfate, sodium persulfate, and ammonium persulfate.

Examples of suitable redox (oxidation-reduction) initiators include, but not limited to, combinations of the above persulfate initiators and a reducing agent such as sodium hydrogen metasulfite or sodium hydrogen sulfite; systems based on an organic peroxide and a tertiary amine, e. g., a system based on benzoyl peroxide and dimethylaniline; systems based on organic hydroperoxide and transition metals, e.g., a system based on cumene hydroperoxide and cobalt naphthenate.

Other examples of the initiator include, but not limited to, pinacols, such as tetraphenyl-1,1,2,2-ethanediol.

A thermoradical initiator is preferably selected from the group consisting of azo initiators and peroxide initiators. Further preferred examples of the thermoradical initiator include 2,2'-azobis(methylisobutylate), tert-butyl peroxypivalate, and di(4-tert-butylcyclohexyl) peroxydicarbonate, and mixtures thereof.

In the present invention, the thermopolymerization initiator is present in a catalytically effective amount, and the amount is not particularly limited. The amount is typically about 0.01 to 5 parts by weight and more preferably about 0.025 to 2 parts by weight relative to 100 parts by weight of the total of vinyl polymer (I) of the present invention and a mixture of the monomer and oligomer added. When an initiator mixture is used, the total of the initiator mixture should be deemed as if the amount is the amount of only one initiator used.

Although the thermal curing conditions are not particularly limited, the temperature is preferably in a range of 50°C to 250°C and more preferably 70°C to 200°C depending on the thermal initiator used, polymer (I), the compound added, etc. The curing time is generally 1 minute to 10 hours depending on the polymerization initiator, monomer, solvent, and reaction temperature used, and the like.

### <Adhesive composition/Adhesive>

The curable composition of the invention can be used as or in an adhesive composition. In the adhesive composition, there may be incorporated one or more of various additives each in such an amount that the characteristics of the curable composition of the invention will never be impaired.

The adhesive composition containing the curable composition of the invention can be widely applied as an adhesive for tapes, sheets, labels, foils and so forth. For example, the adhesive composition can be applied, in the form of a solvent type, emulsion type or hot-melt adhesive, for instance, to films made of a synthetic resin or modified natural product, paper sheets, various types of cloths, metal foils, metallized plastic foils, glass fiber cloths and like base or substrate materials and then cured with active energy ray irradiation or heating.

### BEST MODE FOR CARRYING OUT THE INVENTION

Although examples and comparative examples of the present invention will be described below, the present invention is not limited to these examples.

In the examples and comparative examples below, "parts" and "%" represent "parts by weight" and "% by weight", respectively.

In the examples below, the number-average molecular weight and the molecular weight distribution (ratio of the weight-average molecular weight to the number-average molecular weight) were calculated by a standard polystyrene calibration method using gel permeation chromatography (GPC). In GPC measurement, a polystyrene-crosslinked gel column (Shodex GPC K-804; manufactured by Showa Denko K. K.) and chloroform were used as a GPC column and a mobile solvent, respectively.

In the examples below, the average number of terminal (meth)acryloyl groups means the average of numbers of (meth) acryloyl groups introduced per molecule of a polymer, and is calculated from the number-average molecular weight determined by ¹H NMR analysis (GEMINI-300; product of Varian Technologies Japan Ltd.) and the GPC.

The copper content of each of the polymers obtained in the production examples given below was determined in the following manner.

The polymer obtained was admixed with ultrahigh purity nitric acid and ultrahigh purity sulfuric acid, and the polymer was decomposed by means of microwaves. The residual copper in the decomposition product was assayed using an ICP mass spectrometer (Yokogawa Analytical Systems' HP-4500) and the amount of copper remaining in the polymer was calculated.

### (Production Example 1) (Synthesis of poly(n-butyl acrylate/2-ethylhexyl acrylate) having acryloyl groups at both termini)

First, n-butyl acrylate and 2-ethylhexyl acrylate were polymerized at a weight ratio of 50/50 using cuprous bromide as a catalyst, pentamethyldiethylenetriamine as a ligand, and diethyl 2,5-dibromoadipate as an initiator to produce bromine-terminated poly(n-butyl acrylate/2-ethylhexyl acrylate) having a number-average molecular weight of 37,000 and a molecular weight distribution of 1.23.

Then, 200 g of the resultant polymer was dissolved in N,N-dimethylacetamide (200 mL) , and 2.2 g of potassium acrylate was added to the resultant solution. The resulting mixture was heated and stirred at 70°C for 3 hours in a nitrogen atmosphere to produce a mixture of acryloyl group-terminated poly(n-butyl acrylate/2-ethylhexyl acrylate) (referred to as "polymer [1]" hereinafter). Then, N,N-dimethylacetamide was distilled off from the mixture under reduced pressure, and toluene was added to the residue. The insoluble substance was filtered off, and toluene of the filtrate was distilled off under reduced pressure to purify polymer [1]. After the purification, polymer [1] had a number-average molecular weight of 39, 000, a molecular weight distribution of 1.26, an average number of terminal acryloyl groups of 1.5, and copper content of 2.3 ppm.

### (Production Example 2) (Synthesis of poly(n-butyl acrylate/2-ethylhexyl acrylate) having acryloyl groups at both termini)

First, n-butyl acrylate and 2-ethylhexyl acrylate were polymerized at a weight ratio of 30/70 using cuprous bromide as a catalyst, pentamethyldiethylenetriamine as a ligand, and diethyl 2,5-dibromoadipate as an initiator to produce bromine-terminated poly(n-butyl acrylate/2-ethylhexyl acrylate) having a number-average molecular weight of 41,300 and a molecular weight distribution of 1.36.

Then, 200 g of the resultant polymer was dissolved in N,N-dimethylacetamide (200 mL), and 2.2 g of potassium acrylate was added to the resultant solution. The resulting mixture was heated and stirred at 70°C for 3 hours in a nitrogen atmosphere to produce a mixture of acryloyl group-terminated poly(n-butyl acrylate/2-ethylhexyl acrylate) (referred to as "polymer [2]" hereinafter). Then, N,N-dimethylacetamide was distilled off from the mixture under reduced pressure, and toluene was added to the residue. The insoluble substance was filtered off, and toluene of the filtrate was distilled off under reduced pressure to purify polymer [2]. After the purification, polymer [2] had a number-average molecular weight of 42, 000, a molecular weight distribution of 1.38, an average number of terminal acryloyl groups of 1.5, and copper content of 2 ppm or lower.

### (Production Example 3) (Synthesis of poly(2-ethylhexyl acrylate) having acryloyl groups at both termini)

First, n-butyl acrylate and 2-ethylhexyl acrylate were polymerized at a weight ratio of 0/100 using cuprous bromide as a catalyst, pentamethyldiethylenetriamine as a ligand, and diethyl 2,5-dibromoadipate as an initiator to produce bromine-terminated poly(2-ethylhexyl acrylate) having a number-average molecular weight of 43,678 and a molecular weight distribution of 1.36.

Then, 200 g of the resultant polymer was dissolved in N,N-dimethylacetamide (1,400 mL), and 22 g of potassium acrylate was added to the resultant solution. The resulting mixture was heated and stirred at 70°C for 21 hours in a nitrogen atmosphere to produce a mixture of acryloyl group-terminated poly(2-ethylhexyl acrylate) (referred to as "polymer [3]" hereinafter). In the functional group-introduction into this polymer, excess amount of N,N-dimethylacetamide and potassium acrylate, and longer time were needed relative to that of Production Example 1 and Production Example 2. Then, N, N-dimethylacetamide was distilled off from the mixture under reduced pressure, and toluene was added to the residue. The insoluble substance was filtered off, and toluene of the filtrate was distilled off under reduced pressure to purify polymer [3]. After the purification, polymer [3] had a number-average molecular weight of 48, 653, a molecular weight distribution of 1.45, an average number of terminal acryloyl groups of 1.7, and copper content of 60 ppm.

### (Comparative Production Example 1) (Synthesis of poly(n-butyl acrylate) having acryloyl groups at both termini)

First, n-butyl acrylate was polymerized using cuprous bromide as a catalyst, pentamethyldiethylenetriamine as a ligand, and diethyl 2,5-dibromoadipate as an initiator to produce bromine-terminated poly(n-butyl acrylate).

Then, 200 g of the resultant polymer was dissolved in N,N-dimethylacetamide (200 mL) , and 3.5 g of potassium acrylate was added to the resultant solution. The resulting mixture was heated and stirred at 70°C for 3 hours in a nitrogen atmosphere to produce a mixture of acryloyl group-terminated poly(n-butyl acrylate) (referred to as "polymer [4]" hereinafter). Then, N,N-dimethylacetamide was distilled off from the mixture under reduced pressure, and toluene was added to the residue. The insoluble substance was filtered off.

Then, toluene of the filtrate was distilled off under reduced pressure to purify polymer [4]. After the purification, polymer [4] had a number-average molecular weight of 22,500, a molecular weight distribution of 1.25, an average number of terminal acryloyl groups of 1.9, and copper content of 2 ppm or lower.

### (Example 1)

To 100 parts of the polymer [1] obtained in Production Example 1 were added 0.5 part of bis(2,4,6-trimethylbenzoyl)phenylphosphine oxide (trade name: Irgacure 819; product of Ciba Specialty Chemicals), 1 part of 1-hydroxycyclohexylphenyl ketone (trade name: Irgacure 184; product of Ciba Specialty Chemicals) and 5 parts of acrylic acid, followed by thorough mixing to give a curable composition. The curable composition obtained was evaluated for ball tack, retention and adhesion by the methods mentioned below. The results obtained are shown in Table 1.

### <Ball tack test>

The active energy ray-curable composition prepared in the example was cured by 30 seconds of irradiation using a metal halide lamp (80 W/cm, irradiation distance 15 cm). Test specimens were prepared from the cured product and subjected to ball tack testing according to JIS Z 0237.

### <Retention test>

The active energy ray-curable composition prepared in the example was cured by 30 seconds of irradiation using a metal halide lamp (80 W/cm, irradiation distance 15 cm). Specified test specimens were prepared from the cured product and subjected to retention testing according to JIS Z 0237.

### <Adhesion test>

The adhesion evaluation was carried out in the following manner. The active energy ray-curable composition prepared in each example was cured by 30 seconds of irradiation using a metal halide lamp (80 W/cm, irradiation distance 15 cm). Specified test specimens were prepared from the cured product and subjected to adhesion testing by the 180-degree peeling method according to JIS Z 0237.

### (Example 2)

To 100 parts of the polymer [2] obtained in Production Example 2 were added 0.5 part of bis(2,4,6-trimethylbenzoyl)phenylphosphine oxide (trade name: Irgacure 819; product of Ciba Specialty Chemicals), 1 part of 1-hydroxycyclohexyl phenyl ketone (trade name: Irgacure 184; product of Ciba Specialty Chemicals) and 5 parts of acrylic acid, followed by thorough mixing to give a curable composition. As in example 1, the curable composition obtained was cured by UV irradiation using a metal halide lamp (80 W/cm, irradiation distance 15 cm), and then evaluated for ball tack, retention and adhesion. The results obtained are shown in Table 1.

### (Example 3)

To 100 parts of the polymer [3] obtained in Production Example 3 were added 0.5 part of bis(2,4,6-trthylbenzoyl)phenylphosphine oxide (trade name: Irgacure 819; product of Ciba Specialty Chemicals), 1 part of 1-hydroxycyclohexyl phenyl ketone (trade name: Irgacure 184; product of Ciba Specialty Chemicals) and 5 parts of acrylic acid, followed by thorough mixing to give a curable composition. As in example 1, the curable composition obtained was cured by UV irradiation using a metal halide lamp (80 W/cm, irradiation distance 15 cm), and evaluated for ball tack, retention and adhesion. The results obtained are shown in Table 1.

### (Comparative Example 1)

To 100 parts of urethane acrylate resin (trade name: viscotac UV4108F; product of OSAKA ORGANIC CHEMICAL INDUSTRY LTD.) were added 0.5 part of bis(2,4,6-trimethylbenzoyl)phenylphosphine oxide (trade name: Irgacure 819; product of Ciba Specialty Chemicals) and 1 part of 1-hydroxycyclohexyl phenyl ketone (trade name: Irgacure 184; product of Ciba Specialty Chemicals), followed by thorough mixing to give a curable composition. As in example 1, the curable composition obtained was cured by UV irradiation using a metal halide lamp (80 W/cm, irradiation distance 15 cm) , and evaluated for ball tack, retention and adhesion. The results obtained are shown in Table 1.

### (Comparative Example 2)

To 100 parts of the polymer [4] obtained in Comparative Production Example 1 were added 0.5 part of bis(2,4,6-trimethylbenzoyl)phenylphosphine oxide (trade name: Irgacure 819; product of Ciba Specialty Chemicals) , 1 part of 1-hydroxycyclohexyl phenyl ketone (trade name: Irgacure 184; product of Ciba Specialty Chemicals) and 5 parts of acrylic acid, followed by thorough mixing to give a curable composition. As in Example 1, the curable composition obtained was cured by UV irradiation using a metal halide lamp (80 W/cm, irradiation distance 15 cm), and evaluated for ball tack, retention and adhesion. The results obtained are shown in Table 1.

**Table 1**

| | | Ball tack | Retention | Adhesion |
|---|---|---|---|---|
| Example 1 | Polymer [1] | Δ | Δ | Δ |
| Example 2 | Polymer [2] | ○ | Δ | Δ |
| Example 3 | Polymer [3] | ○ | Δ | Δ |
| Comparative Example 1 | Urethane acrylate resin | × | × | ○ |
| Comparative Example 2 | Polymer [4] | Δ | Δ | × |

| | | | | |
|---|---|---|---|---|
| ○: Excellent, Δ : Fair, X: Poor | | | | |

As is evident from Table 1, the adhesive characteristics, namely ball tack, retention and adhesion, were found well balanced in Example 1, Example 2 and Example 3.

## Claims

1. A curable composition
which comprises, as an essential component, polymer (I), which is a (meth) acrylic acid ester (co) polymer having, in each molecule, at least one group represented by the general formula 1:
-OC(O)C(R^{a})=CH₂ (1)
(wherein R^{a} represents a hydrogen atom or a hydrocarbon group containing 1 to 20 carbon atoms) at a terminus of the molecular chain and is obtained by (co) polymerizing an (meth) acrylic acid alkyl ester the alkyl moiety of which contains 7 to 20 carbon atoms.

2. The curable composition according to Claim 1
wherein the polymer (I) is obtained by copolymerizing a (meth)acrylic acid alkyl ester the alkyl moiety of which contains 4 to 6 carbon atoms and a (meth) acrylic acid alkyl ester the alkyl moiety of which contains 7 to 20 carbon atoms.

3. The curable composition according to Claim 1 or 2
wherein the polymer (I) is obtained by copolymerizing 1 to 99% by weight of the (meth) acrylic acid alkyl ester the alkyl moiety of which contains 7 to 20 carbon atoms.

4. The curable composition according to any one of Claims 1 to 3
wherein the polymer (I) has a number average molecular weight of not lower than 10,000 but not higher than 100,000.

5. The curable composition according to any one of Claims 1 to 4
wherein the polymer (I) has a weight average molecular weight-to-number average molecular weight ratio of lower than 1.8 as determined by gel permeation chromatography.

6. The curable composition according to any one of Claims 1 to 5
wherein the polymer (I) is produced by reacting a halogen-terminated vinyl polymer with a compound represented by the general formula 2:
M⁺⁻OC(O)C (R^{a})=CH₂ (2)
(wherein R^{a} represents a hydrogen atom or a hydrocarbon group containing 1 to 20 carbon atoms and M⁺ represents an alkali metal ion or a quaternary ammonium ion).

7. The curable composition according to any one of Claims 1 to 6
wherein the main chain of the polymer (I) is produced by living radical polymerization.

8. The curable composition according to Claim 7
wherein the living radical polymerization is atom transfer radical polymerization.

9. The curable composition according to any one of Claims 1 to 8
wherein the polymer (I) has a copper content of not higher than 100 ppm.

10. The curable composition according to any one of Claims 1 to 9
which further comprises a monomer and/or oligomer having a radical polymerizable group.

11. The curable composition according to any one of Claims 1 to 9
which further comprises a monomer and/or oligomer having an anionic polymerizable group.

12. The curable composition according to any one of Claims 1 to 11
which further comprises a monomer and/or oligomer having a (meth)acryloyl group.

13. The curable composition according to Claim 12
wherein the monomer and/or oligomer having a (meth) acryloyl group has a number average molecular weight of not lower than 2,000.

14. The curable composition according to any one of Claims 1 to 13
which further comprises a photo-induced polymerization initiator.

15. The curable composition according to Claim 14
wherein the photo-induced polymerization initiator is a photoradical initiator.

16. The curable composition according to Claim 14
wherein the photo-induced polymerization initiator is a photoanion initiator.

17. The curable composition according to any one of Claims 1 to 13
which further comprises a thermopolymerization initiator.

18. The curable composition according to Claim 17
wherein the thermopolymerization initiator is at least one species selected from the group consisting of azo initiators, peroxides, persulfates, and redox initiators.

19. An adhesive composition
which comprises the curable composition according to any one of Claims 1 to 18.

20. An adhesive
which is obtained by curing the adhesive composition according to Claim 19 with active energy ray irradiation or heat.
